# EUROPÄISCHE PATENTSCHRIFT

(11) **EP 2 964 996 B1**
(45) Veröffentlichungstag und Bekanntmachung des Hinweises auf die Patenterteilung: **09.11.2016**
(21) Anmeldenummer: 14708188.9
(22) Anmeldetag: 26.02.2014
(51) Int. Cl.: F16L 59/153, F16L 59/14, B29C 44/32, B29C 44/30, B29C 44/56, B29L 23/00, B29K 75/00

(54) **WÄRMEGEDÄMMTES GEWELLTES LEITUNGSROHR**
THERMALLY INSULATED CORRUGATED CONDUIT
TUYAU ONDULÉ À ISOLATION THERMIQUE

(30) Priorität: 06.03.2013 CH 551132013
(43) Veröffentlichungstag der Anmeldung: 13.01.2016
(73) Patentinhaber: Brugg Rohr Ag Holding, 5200 Brugg (CH)
(72) Erfinder: OESCHGER, Alfred, 5276 Wil (CH); RUDI, Roberto, 5107 Schinznach-Dorf (CH)
(74) Vertreter: Schalch, Rainer
(86) Internationale Anmeldenummer: PCT/CH2014/000025
(87) Internationale Veröffentlichungsnummer: WO 2014/134745

(56) Entgegenhaltungen:
- EP-A1- 0 897 788
- EP-A2- 0 892 207
- WO-A1-2010/085906
- DE-A1- 2 127 646
- DE-A1- 3 635 515
- DE-A1- 10 021 523
- DE-U1- 20 315 754

## Beschreibung

### Gebiet der Erfindung

Die Erfindung betrifft ein wärmegedämmtes, gewelltes Leitungsrohr mit mindestens einem inneren Mediumsrohr aus Kunststoff oder Metall, einer das Mediumsrohr umgebenden Wärmedämmschicht aus Kunststoff und einem die Wärmedämmschicht umgebenden Aussenmantel aus Kunststoff, wobei sich die Wellung in die Wärmedämmschicht erstreckt, gemäss Oberbegriff des Anspruchs 1. Die Erfindung betrifft weiter ein Verfahren zur Herstellung eines derartigen wärmegedämmten, gewellten Leitungsrohrs.

### Hintergrund

EP-A 0 897 788 beschreibt ein Verfahren zur Bildung eines gewellten und wärmegedämmten Leitungsrohrs. Nach diesem Verfahren hergestellte Leitungsrohre der eingangs genannten Art haben sich bewährt. Aus WO 2010/085906 ist eine Weiterbildung des Verfahrens bekannt, mit dem eine tiefere Wellung erzielt werden kann, wobei explizit ein Leitungsrohr mit einer Wellung gezeigt wird, die jeweils eine u-förmige Vertiefung im Aussenmantel und der Wärmedämmung zwischen gerade verlaufenden Abschnitten aufweist. Die Welltiefe beträgt 4 mm bis 10 mm und es soll eine bessere Biegbarkeit des Leitungsrohrs erzielt werden. Die gute Biegbarkeit eines Leitungsrohrs erlaubt das Aufrollen einer grösseren Lieferlänge auf eine Transportrolle für das Leitungsrohr, was für die Logistikkosten vorteilhaft ist. Ferner kann der Kraftaufwand bei der Installation geringer sein. DE 36 35 515 A1 zeigt ein wärmegedämmtes Leitungsrohr, bei dem der Aussenmantel aus einem kunststoffbeschichteten Stahlrohr mit einer Welltiefe von 4,9 mm gebildet ist und die Wellenberge und Wellentäler kreisbogenförmig sind. DE 100 21 523 zeigt ein Wellrohr mit runden Wellenbergen und Wellentälern und einer Welltiefe von 2 mm bis 4 mm. EP 0 892 207 A2 zeigt ein weiteres Wellrohr mit runden Wellentälern und Wellenbergen. WO 2010/085906 A1 zeigt ein Verfahren zur Herstellung eines wärmegedämmten Leitungsrohrs, bei welchem nach der Extrusion des Aussenmantels mit Formwerkzeugen eine Wellung mit runden Wellentälern und ebenen Wellenbergen erzeugt wird. DE 203 15 754 U1 zeigt ein Wellrohr mit gerade verlaufenden Wellentälern und Wellenbergen.

### Darstellung der Erfindung

Der Erfindung liegt die Aufgabe zu Grunde ein wärmegedämmtes gewelltes Leitungsrohr mit verbesserten Eigenschaften zu schaffen.

Diese Aufgabe wird bei dem eingangs genannten Leitungsrohr dadurch gelöst, dass der Rundungsradius der kreisförmigen Wellentäler bzw. Wellenberg der Rundungsradius der Wellentäler RT grösser ist als der Rundungsradius der Wellenberge RB. Dies ergibt eine besonders gute Biegbarkeit und Homogenität der Dicke des Aussenmantels.

Es zeigt sich, dass mit der beanspruchten Formgebung und Dimensionierung ein Aussenmantel mit einer besonders guten Gleichmässigkeit der Aussenmanteldicke erzielbar ist, so dass in den Wellentälern und den Wellenbergen weitestgehend dieselbe Materialdicke des Aussenmantels vorhanden ist. Es ergeben sich mit der Formgebung und Dimensionierung keine nachteiligen Materialansammlungen in den Wellentälern. Es zeigt sich weiter, dass damit auch bei den handelsüblichen Aussendurchmessern der Leitungsrohre im Bereich von 63 mm bis 202 mm eine deutlich verbesserte Biegbarkeit erzielt werden kann. Die Wellentäler und die Wellenberge sind im Querschnitt gesehen jeweils von einem Teil eines Kreises gebildet und somit weist das Wellental bzw. der Wellenberg jeweils eine kreisrunde Form auf, wobei die Kreisteile durch einen im Wesentlichen geraden Abschnitt verbunden sind. Die Kombination der Welltiefe im Bereich von 4,5 mm bis 8 mm und der kreisrunden Form ergibt, je nach Leitungsrohrdurchmesser, eine um 20% bis 60% erhöhte Flexibilität bei der Biegung des Leitungsrohrs im Vergleich zu einem Rohr mit glattem Mantel, was 20% bis 40% längere Liefermengen pro aufgewickelte Transporteinheit ergeben kann. Dies ergibt tiefere Logistikkosten und das Leitungsrohr ergibt mit der erhöhten Flexibilität eine vereinfachte Handhabung.

Bevorzugt ist das Leitungsrohr so ausgebildet, dass bei einem Aussendurchmesser D des Leitungsrohrs im Bereich von 63 mm bis 90 mm die Welltiefe T im Bereich von 4,5 mm bis 5 mm liegt, insbesondere, dass die Welltiefe T 4,5 mm beträgt. Weiter ist es bevorzugt, dass bei einem Aussendurchmesser D des Leitungsrohrs im Bereich von grösser als 90 mm bis 202 mm die Welltiefe T im Bereich von 5 mm bis 8 mm liegt, insbesondere, dass die Welltiefe T 5,5 mm beträgt. Es zeigt sich, dass diese Anpassung der Welltiefe an den Leitungsrohraussendurchmesser die erwähnten Vorteile besonders gut ergibt.

Besonders bevorzugte Bereiche für die Rundungsradien für verschiedene Aussendurchmesser des Leitungsrohrs sind nachfolgend erläutert.

Ferner gibt es bevorzugte Bereiche für den Abstand W zweier benachbarter Wellentäler, was ebenfalls die Biegbarkeit und die Gleichmässigkeit der Dicke des Aussenmantels positiv beeinflusst. Auch dazu werden nachfolgend bevorzugte Bereiche in Abhängigkeit vom Aussendurchmesserbereich des Leitungsrohrs angegeben.

Es zeigt sich, wie erwähnt, dass bei der Herstellung des Leitungsrohrs unter Verwendung der obigen Formgebung bzw. Parameter eine sehr homogene Verteilung des Materials des Aussenmantels entlang der Wellung ergibt, was zu einer Materialeinsparung führt. Das bevorzugte Herstellungsverfahren ist durch die Merkmale des Anspruchs 10 gegeben.

Auch dabei werden die erwähnten bevorzugten Bereiche für die Welltiefe und/oder den Rundungsradius und/oder den Abstand der Wellenberge verwendet, wie das beim Leitungsrohr erwähnt ist, um die genannten Vorteile zu erhalten.

### Kurze Beschreibung der Zeichnungen

Weitere Ausgestaltungen, Vorteile und Anwendungen der Vorrichtungen und der Verfahren ergeben sich aus den abhängigen Ansprüchen und aus der folgenden Beschreibung von Ausführungsbeispielen anhand der Figuren. Dabei zeigt
Figur 1 einen Querschnitt durch die Mittellängsachse eines Leitungsrohrs gemäss der Erfindung; und
Figur 2 schematisch eine Anlage zur Durchführung des Verfahrens zur Herstellung des Leitungsrohrs.

### Wege zur Ausführung der Erfindung

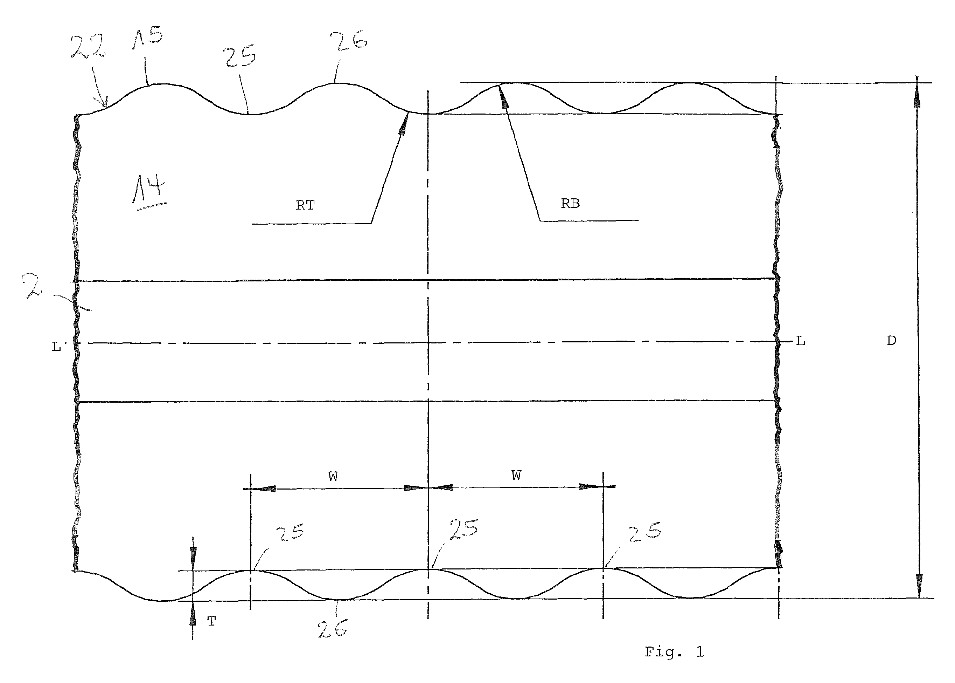

Figur 1 zeigt eine Schnittdarstellung eines Leitungsrohrs 22 als Querschnitt durch die Mittellängsachse L des Leitungsrohrs, wobei nur ein kurzer Abschnitt des ganzen Leitungsrohrs 22 gezeigt ist. Dieses ist aber entlang seiner Länge so ausgeführt, wie an Hand des Abschnitts erläutert. Wenn jeweils von Querschnitt gesprochen wird, dann ist eine solche Querschnittansicht durch die Längsachse L gemäss Figur 1 gemeint, welche die Form der Wellung des Leitungsrohrs und dessen inneren Aufbau ersichtlich macht. Die einzelnen Schichten oder Rohre sind aber nicht massstäblich bzw. für die Zeichnung vereinfacht dargestellt.

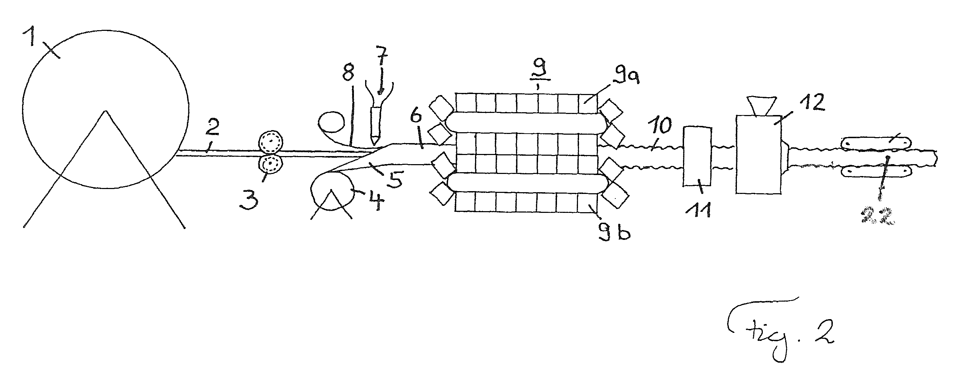

Das Leitungsrohr 22 weist in diesem Ausführungsbeispiel der Erfindung ein einzelnes inneres Mediumsrohr 2 auf, durch welches bei der Verwendung des Leitungsrohrs das zu transportierende Medium bzw. Fluid fliesst. Es können auch mehrere Mediumsrohre vorhanden sein. Das Mediumsrohr 2 kann aus Kunststoff, z.B. aus Polyethylen gebildet sein oder aus Metall. Es kann ein glattes Rohr oder ein gewelltes Rohr sein. Das Mediumsrohr 2 ist von einer Wärmedämmschicht 14 umgeben, welche vorzugsweise aus einem Polyurethanschaum gebildet ist. Es wird nachfolgend anhand von Figur 2 erläutert, wie die Umschäumung des Mediumsrohrs erfolgen kann. Bevorzugt ist die Wärmedämmschicht von einem Polyurethan-Hartschaumstoff mit einer Dichte von 45 kg/m³ bis 80 kg/m³ gebildet. Der Aussenmantel 15 des Leitungsrohrs 22 ist in der Zeichnung zu deren Vereinfachung nur als Linie dargestellt, ist aber ein Kunststoffmantel von mehreren Millimetern Dicke, insbesondere mit einer Dicke im Bereich von 2 mm bis 5 mm. Das Material des Aussenmantels ist ebenfalls ein Kunststoff, bevorzugt Polyethylen, PE, z.B. als PE-LD mit einer Dichte von 915 kg/m³ bis 935 kg/m³. Auch andere PE-Arten oder andere Kunststoffe können verwendet werden.

Das Leitungsrohr 22 gemäss der Erfindung ist ein gewelltes Leitungsrohr, wobei sowohl der Aussenmantel 15 als auch die Wärmedämmung 14 die Wellung aufweist. Diese beiden Teile des Leitungsrohrs liegen in direktem Kontakt und der Aussenmantel 15 schliesst unterbruchslos an die Wärmedämmung an. Dies wird besonders mit der an Hand von Figur 2 erläuterten Art der Herstellung erreicht.

Die Wellung ist mit den Wellentälern 25 und den Wellenbergen 26 dargestellt, die im Querschnitt von Figur 1 ersichtlich sind. Diese beiden Elemente der Wellform sind gemäss der Erfindung rund geformt, wobei sowohl das Wellental 25 als auch der Wellenberg 26 im Querschnitt gesehen kreisrund ist bzw. diese Elemente der Wellung sind jeweils Teil eines Kreises. Entsprechend kann für das Wellental ein Radius RT angegeben werden und für den Wellenberg ein Radius RB. Weiter ist es dabei so, dass der Radius des Wellentales grösser ist als der Radius des Wellenbergs, also die Beziehung RT > RB gilt. Die Wellenberge und Wellentäler sind durch im Wesentlichen gerade verlaufende Abschnitte der Wellung verbunden.

Die Tiefe T der Wellung, also die Differenz zwischen der obersten Stelle der Wellenberge 26 und der untersten Stelle der Wellentäler 25 liegt gemäss der Erfindung im Bereich von 4,5 mm bis 8 mm bei einem Aussendurchmesser D (gemessen von den Wellenbergen aus) im Bereich von 63 mm bis 202 mm. Es hat sich als Vorteil gezeigt, dass mit dieser Formgebung und Dimensionierung bei der nachfolgend erläuterten Herstellungsmethode für das Leitungsrohr eine sehr homogene Dicke des Aussenmantels ergibt, während andere Formen oder Dimensionen zu einer schwankenden Dicke in Längsrichtung der Wellung führen können. Dies ist unerwünscht, da dann der Aussenmantel generell dicker gewählt werden muss, um auch an den dünnsten Stellen noch genügend Dicke aufzuweisen, während dann an den dicksten Stellen ein unnötiger Materialüberschuss vorhanden ist. Mit der erfindungsgemässen Wellformgebung und Tiefe der Wellung wird also als positiver Effekt ein Aussenmantel ermöglicht, der eine gleichmässigere Dicke aufweist und damit auch eine Materialersparnis beim Aussenmantelmaterial. Es zeig sich weiter, dass diese Merkmale, die die gleichmässige Dicke des Aussenmantels bewirken, auch eine verbesserte Biegbarkeit des Leitungsrohrs 22 ergeben.

Bevorzugt wird bei einem Aussendurchmesser D des Leitungsrohrs 22 im Bereich von 63 mm bis 90 mm die Welltiefe T im Bereich von 4,5 mm bis 5 mm ausgeführt. Bevorzugt liegt die Welltiefe T bei 4,5 mm.

Bevorzugt wird bei einem Aussendurchmesser D des Leitungsrohrs 22 im Bereich von grösser als 90 mm bis 202 mm die Welltiefe T im Bereich von 5 mm bis 8 mm ausgeführt. Bevorzugt liegt die Welltiefe T bei 5,5 mm.

Ferner gibt es einen bevorzugten Bereich für den Abstand W der tiefsten Stelle zweier aufeinanderfolgender Wellentäler 25, welcher die Wirkungen des homogenen Aussenmantels und der guten Biegbarkeit besonders gut ergibt. Dieser Abstand liegt bevorzugt im Bereich von 25 mm bis 50 mm.

Bevorzugt liegt bei einem Aussendurchmesser D des Leitungsrohrs im Bereich von 63 mm bis 90 mm der Abstand W zweier benachbarter Wellentäler im Bereich von 25 mm bis 33 mm und insbesondere im Bereich von 25 mm bis 27 mm.

Weiter ist es bevorzugt, dass bei einem Aussendurchmesser D des Leitungsrohrs im Bereich von grösser als 90 mm bis 202 mm der Abstand W der tiefsten Stelle zweier benachbarter Wellentäler im Bereich von grösser als 33 mm bis 50 mm liegt und insbesondere im Bereich von grösser 33 mm bis 40 mm liegt und insbesondere im Bereich von grösser als 33 mm bis 35 mm liegt. Es zeigt sich, dass die bevorzugten Bereiche ein gutes Resultat für die Biegbarkeit und die Homogenität des Aussenmantels ergeben.

Figur 2 zeigt eine Herstellung des Leitungsrohrs 22, wie sie in den Grundzügen aus EP-A 0 897 788 bekannt ist. Dabei wird ein Mediumsrohr bzw. Innenrohr 2 von der Vorratstrommel 1 kontinuierlich abgezogen. Die Mittel zum Abziehen bzw. Fördern in Fertigungsrichtung sind dabei nicht gezeigt, da solche Mittel dem Fachmann bekannt sind. Das Mediumsrohr kann ein Kunststoffrohr oder auch ein Metallrohr sein und es kann glatt oder gewellt sein. Insbesondere findet ein Mediumsrohr 2 aus vernetztem Polyethylen Verwendung. Das Mediumsrohr 2 kann durch ein Kaliberrollenpaar 3 geführt werden, dessen Rollen angetrieben sind. Das Kaliberrollenpaar 3 ist vorzugsweise in zwei senkrecht aufeinander stehenden Richtungen quer zur Fertigungsrichtung bzw. Abzugsrichtung verschiebbar. Wie bereits erwähnt, können auch zwei oder mehr Mediumsrohre im Leitungsrohr vorhanden sein und entsprechend würden zwei oder mehr Innenrohre 2 gemeinsam den weiteren Schritten zugeführt.

Von einer Vorratsspule 4 wird eine Kunststofffolie 5, insbesondere eine Polyethylenfolie, abgezogen und um das Mediumsrohr 2 konzentrisch zu diesem zu einem Rohr 6 mit einer verklebten oder verschweissten Längsnaht geformt. Die Kunststofffolie 5 kann auch eine Mehrschichtfolie sein. In das offene Rohr 6 wird ein aufschäumendes Kunststoffgemisch eingebracht, insbesondere auf Polyurethanbasis oder auf Polyethylenbasis, z.B. mittels der Düse 7. Das geschlossene Rohr 6 wird in ein Formwerkzeug 9 eingeführt, welches aus einer Vielzahl von Formhälften 9a und 9b gebildet ist, die gemeinsam eine "wandernde Form" für das mit der Isolierschicht und der Folie 5 bzw. 6 versehene Mediumsrohr bilden. Die Folie 5 bildet somit die äusserste Schicht der Wärmedämmung.

Die der Folie 5 bzw. dem Rohr 6 zugewandten Oberflächen der Formhälften 9a und 9b weisen das vorgängig erläuterte Wellenprofil auf, in welches die Folie 5, 6 infolge des Schäumdruckes eingeformt wird. Der aus dem Formwerkzeug 9 austretende Rohling 10 weist somit eine gewellte Oberfläche mit der erläuterten gewünschten Wellung auf.

Der Rohling 10 kann danach eine bekannte Röntgenstrahleinrichtung 11 durchlaufen, mit deren Hilfe der Rohling 10 kontinuierlich auf eine exakt zentrische Lage des Mediumsrohrs 2 oder eine korrekte Lage mehreren Mediumsrohre 2 innerhalb der Wärmedämmung 14 überprüft wird.

Im nächsten Herstellungsschritt wird auf den Rohling 10 mittels eines Extruders 12 der Aussenmantel 15 des Leitungsrohrs aus Kunststoff aufextrudiert. Es wird dabei auf bekannte Weise ein Vakuum erzeugt, welches das Anliegen des Aussenmantels an der geschäumten Wärmedämmung bzw. der Folie 5, 6 des Rohlings 10 bewirkt. Der Aussenmantel 15 legt sich an die Wellung des Rohlings 10 an, womit das Leitungsrohr die gewünschte Formgebung und Dimensionierung erhält. Der Aussenmantel verklebt dabei aufgrund seiner durch die Extrusion erhaltenen hohen Temperatur mit der Kunststofffolie 5, 6, so dass der Aussenmantel unterbrechungslos bzw. direkt an der Wärmedämmung anliegt. Das fertige Leitungsrohr 22 mit der Formgebung und Dimensionierung gemäss der Erfindung kann dann mittels eines angetriebenen Abzugs abgezogen und auf eine Transportrolle aufgewickelt werden.

## Patentansprüche

1. Wärmegedämmtes, gewelltes Leitungsrohr (22) mit mindestens einem inneren Mediumsrohr (2) aus Kunststoff oder Metall, einer das Mediumsrohr (2) umgebenden Wärmedämmschicht (14) aus Kunststoff und einem die Wärmedämmschicht (14) umgebenden Aussenmantel (15) aus Kunststoff, wobei sich die Wellung (25, 26) des Leitungsrohrs (22) bis in die Wärmedämmschicht (14) erstreckt, und wobei die Wellentäler (25) und die Wellenberge (26) der Wellung eine runde Querschnittsform aufweisen, wobei bei einem Aussendurchmesser des Leitungsrohrs von 63 mm bis 202 mm die Welltiefe T im Bereich von 4,5 mm bis 8 mm liegt, wobei die runde Querschnittsform der Wellentäler (25) und der Wellenberge (26) jeweils Teil eines Kreises ist, und wobei die Kreisteile durch im Wesentlichen gerade Abschnitte der Wellung verbunden sind, **dadurch gekennzeichnet, dass** der Rundungsradius RT der Wellentäler (25) grösser als der Rundungsradius RB der Wellenberge (26) ist.

2. Leitungsrohr nach Anspruch 1, **dadurch gekennzeichnet, dass** bei einem Aussendurchmesser D des Leitungsrohrs (22) im Bereich von 63 mm bis 90 mm die Welltiefe T im Bereich von 4,5 mm bis 5 mm liegt, insbesondere, dass die Welltiefe T 4,5 mm beträgt.

3. Leitungsrohr nach Anspruch 1, **dadurch gekennzeichnet, dass** bei einem Aussendurchmesser D des Leitungsrohrs (22) im Bereich von grösser als 90 mm bis 202 mm die Welltiefe T im Bereich von 5 mm bis 8 mm liegt, insbesondere, dass die Welltiefe T 5,5 mm beträgt.

4. Leitungsrohr nach Anspruch 1, **dadurch gekennzeichnet, dass** bei einem Aussendurchmesser D des Leitungsrohrs (22) im Bereich von 63 mm bis 90 mm der Radius RT der Wellentäler (25) im Bereich von grösser als 10 mm bis 11 mm liegt und der Radius RB der Wellenberge RB im Bereich von grösser als 9 mm bis 10 mm liegt.

5. Leitungsrohr nach Anspruch 1, **dadurch gekennzeichnet, dass** bei einem Aussendurchmesser D des Leitungsrohrs (22) im Bereich von grösser als 90 mm bis 202 mm der Radius RT der Wellentäler (25) im Bereich von grösser als 15 mm bis 18 mm liegt und der Radius RB der Wellenberge (26) im Bereich von grösser als 13 mm bis 15 mm liegt.

6. Leitungsrohr nach einem der Ansprüche 1 bis 5, **dadurch gekennzeichnet, dass** der Abstand W der tiefsten Stelle zweier benachbarter Wellentäler (25) im Bereich von 25 mm bis 50 mm liegt.

7. Leitungsrohr nach Anspruch 6, **dadurch gekennzeichnet, dass** bei einem Aussendurchmesser D des Leitungsrohrs (22) im Bereich von 63 mm bis 90 mm der Abstand W zweier benachbarter Wellentäler (25) im Bereich von 25 mm bis 33 mm liegt und insbesondere im Bereich von 25 mm bis 27 mm liegt.

8. Leitungsrohr nach Anspruch 6, **dadurch gekennzeichnet, dass** bei einem Aussendurchmesser D des Leitungsrohrs (22) im Bereich von grösser als 90 mm bis 202 mm der Abstand W zweier benachbarter Wellentäler (25) im Bereich von grösser als 33 mm bis 50 mm liegt und insbesondere im Bereich von grösser 33 mm bis 40 mm liegt und insbesondere im Bereich von grösser als 33 mm bis 35 mm liegt.

9. Leitungsrohr nach einem der Ansprüche 1 bis 8, **dadurch gekennzeichnet, dass** die Wärmedämmschicht (14) von einem Polyurethan-Hartschaumstoff mit einer Dichte von 45 kg/m³ bis 80 kg/m³ gebildet ist.

10. Verfahren zur Herstellung eines wärmegedämmten, gewellten Leitungsrohrs (22) nach einem der Ansprüche 1 bis 9, welches mindestens ein inneres Mediumsrohr (2), einen im Abstand dazu angeordneten gewellten Aussenmantel (15) aus Kunststoff und eine den Raum zwischen Mediumsrohr (2) und Aussenmantel ausfüllende Wärmedämmung (14) aus geschäumtem Kunststoff umfasst, wobei zunächst das Mediumsrohr (2) mit der Wärmedämmung (14) umschäumt und dabei die Wärmedämmung geformt wird, wonach auf den vom umschäumten Mediumsrohr gebildeten Rohling (10)der Aussenmantel (15) extrudiert wird und wobei bei der Formung der Wärmedämmung die Wellentäler (25) und die Wellenberge (26) der Wellung mit im Querschnitt gesehen runder Querschnittsform erzeugt werden, wobei bei einem Aussendurchmesser des Leitungsrohrs von 63 mm bis 202 mm die Welltiefe T im Bereich von 4,5 mm bis 8 mm liegend erzeugt wird, wobei die runde Querschnittsform der Wellentäler (25) und der Wellenberge (26) jeweils als Teil eines Kreises erzeugt wird, **dadurch gekennzeichnet, dass** der Rundungsradius RT der Wellentäler (25) grösser als der Rundungsradius RB der Wellenberge (26) erzeugt wird.

11. Verfahren nach Anspruch 10, **dadurch gekennzeichnet, dass** bei einem Aussendurchmesser D des Leitungsrohrs (22) im Bereich von 63 mm bis 90 mm der Radius RT der Wellentäler (25) im Bereich von grösser als 10 mm bis 11 mm erzeugt wird und der Radius RB der Wellenberge RB im Bereich von grösser als 9 mm bis 10 mm erzeugt wird.

12. Verfahren nach Anspruch 10, **dadurch gekennzeichnet, dass** bei einem Aussendurchmesser D des Leitungsrohrs (22) im Bereich von grösser als 90 mm bis 202 mm der Radius RT der Wellentäler (25) im Bereich von grösser als 15 mm bis 18 mm erzeugt wird und der Radius RB der Wellenberge (26) im Bereich von grösser als 13 mm bis 15 mm erzeugt wird.

13. Verfahren nach einem der Ansprüche 10 bis 12, **dadurch gekennzeichnet, dass** der Abstand W der tiefsten Stelle zweier benachbarter Wellentäler (25) im Bereich von 25 mm bis 50 mm liegend erzeugt wird.

14. Verfahren nach Anspruch 13, **dadurch gekennzeichnet, dass** bei einem Aussendurchmesser D des Leitungsrohrs (22) im Bereich von 63 mm bis 90 mm der Abstand W zweier benachbarter Wellentäler (25) im Bereich von 25 mm bis 33 mm liegend erzeugt wird, und insbesondere im Bereich von 25 mm bis 27 mm liegend erzeugt wird.

15. Verfahren nach Anspruch 13, **dadurch gekennzeichnet, dass** bei einem Aussendurchmesser D des Leitungsrohrs (22) im Bereich von grösser als 90 mm bis 202 mm der Abstand W zweier benachbarter Wellentäler (25) im Bereich von grösser als 33 mm bis 50 mm liegend erzeugt wird, und insbesondere im Bereich von grösser 33 mm bis 40 mm liegend erzeugt wird, und insbesondere im Bereich von grösser als 33 mm bis 35 mm liegend erzeugt wird.

## Claims

1. Thermally-insulated, corrugated conduit (22) comprising at least one inner service pipe (2) made from plastic or metal, wherein a thermal-insulating layer (14) made of plastic surrounds the service pipe (2) and an outer housing (15) made of plastic surrounds the thermal-insulating layer (14), wherein the corrugation (25, 26) of the conduit (22) extends into the thermal insulation layer (14), wherein the troughs (25) and peaks (26) of the corrugation have a round cross-sectional shape, wherein with an outer diameter of the conduit in the range of 63 mm to 202 mm, the corrugation depth T is in the range of 4.5 mm to 8 mm, wherein the round, cross-sectional form of the troughs (25) and peaks (26) in each case is part of a circle, wherein the circle portions are connected by substantially straight sections of the corrugation, **characterized in that** the radius of curvature RT of the troughs (25) is greater than the radius of curvature RB of the peaks (26).

2. Conduit according to claim 1, **characterized in that** with an outer diameter D of the conduit (22) in the range of 63 mm to 90 mm, the corrugation depth T is in the range of 4.5 mm to 5 mm, in particular that the corrugation depth T is 4.5 mm.

3. Conduit according to claim 1, **characterized in that** with an outer diameter D of the conduit (22) in the range of 90 mm to 202 mm, the corrugation depth T is in the range of 5 mm to 8 mm, in particular the corrugation depth T is 5.5 mm.

4. Conduit according to claim 1, **characterized in that** with an outer diameter D of the conduit (22) in the range of 63 mm to 90 mm, the radius RT of the troughs (25) is in the range of greater than 10 mm to 11 mm, and the radius RB of the peaks is in the range of greater than 9 mm to 10 mm.

5. Conduit according to claim 1, **characterized in that** with an outer diameter D of the conduit (22) in the range of greater than 90 mm up to 202 mm, the radius RT of the troughs (25) is in the range of greater than 15 mm up to 18 mm, and the radius RB of the peaks (26) is in the range of greater than 13 mm up to 15 mm.

6. Conduit according to any one of claims 1 to 5, **characterized in that** the distance W of the lowest point of two adjacent troughs (25) is in the range of 25 mm to 50 mm.

7. Conduit according to claim 6, **characterized in that** with an outer diameter D of the conduit (22) in the range of 63 mm to 90 mm, the distance W of two adjacent troughs (25) is in the range of 25 mm to 33 mm and in particular is in the range of 25 mm to 27 mm.

8. Conduit according to claim 6, **characterized in that** with an outer diameter D of the conduit (22) in the range of greater than 90 mm up to 202 mm, the distance W of two adjacent troughs (25) is in the range of greater than 33 mm up to 50 mm and in particular is in the range of greater than 33 mm up to 40 mm and in particular is in the range of greater than 33 mm up to 35 mm.

9. Conduit according to any one of claims 1 to 8, **characterized in that** the thermal insulation layer (14) is formed from a rigid polyurethane foam having a density of 45 kg/m³ to 80 kg/m³.

10. Method for producing a thermally-insulated, corrugated conduit (22) according to any one of claims 1 - 9, comprising at least an inner service pipe (2), a corrugated outer housing (15) made of plastic arranged at a distance therefrom and a thermal insulation (14) made from foamed plastic filling out the space between service pipe (2) and outer housing, wherein the service pipe (2) is first foam-covered with the thermal insulation (14) and the thermal insulation is formed during this step, whereupon the outer housing (15) is extruded on the blank (10) formed by the foam-covered service pipe and wherein in the forming of the thermal insulation the troughs (25) and peaks (26) of the corrugation seen in cross-section are produced with round cross-sectional shape, wherein with an outer diameter of the service pipe of 63 mm to 202 mm, the corrugation depth T is produced in the range of 4.5 mm to 8 mm, wherein the round cross-sectional form of the troughs (25) and peaks (26) in each case is produced as part of a circle, **characterized in that** the radius of curvature RT of the troughs (25) is greater than the radius of curvature RB of the peaks (26).

11. Method according to claim 10, **characterized in that** with an outer diameter D of the conduit (22) in the range of 63 mm to 90 mm, the radius RT of the troughs (25) is produced in the range of greater than 10 mm up to 11 mm, and the radius RB of the peaks RB is produced in the range of greater than 9 mm up to 10 mm.

12. Method according to claim 10, **characterized in that** with an outer diameter D of the conduit (22) in the range of greater than 90 mm up to 202 mm, the radius RT of the troughs (25) is produced in the range of greater than 15 mm up to 18 mm, and the radius RB of the peaks (26) is produced in the range of greater than 13 mm up to 15 mm.

13. Method according to any one of claims 10 to 12, **characterized in that** the distance W of the lowest point of two adjacent troughs (25) is produced in the range of 25 mm to 50 mm.

14. Method according to claim 13, **characterized in that** with an outer diameter D of the conduit (22) in the range of 63 mm to 90 mm, the distance W of two adjacent troughs (25) is produced lying down in the range of 25 mm to 33 mm and in particular is produced lying down in the range of 25 mm to 27 mm.

15. Method according to claim 13, **characterized in that** with an outer diameter D of the conduit (22) in the range of greater than 90 mm up to 202 mm, the distance W of two adjacent troughs (25) is produced in the range of greater than 33 mm up to 50 mm, lying down, and in particular is produced in the range of greater than 33 mm up to 40 mm, and in particular is produced in the range of greater than 33 mm up to 35 mm.

## Revendications

1. Conduit ondulé, thermiquement isolée (22) comprenant au moins un tube à fluide intérieur (2) en plastique ou en métal, une couche d'isolation thermique (14) en plastic entourant le tube à fluide (2) et une carcasse extérieure (15) en plastique entourant la couche d'isolation thermique (14), l'ondulation (25, 26) du conduit (22) s'étendant dans la couche d'isolation thermique (14), et les creux d'onde (25) et les sommets d'onde (26) de l'ondulation ayant une forme de coupe transversale ronde, avec un diamètre extérieur du conduit compris entre 63 mm et 202 mm, la profondeur de l'ondulation T étant comprise entre 4.5 mm et 8 mm, dans chaque cas la ronde forme de section transversale des creux d'onde (25) et des sommets d'onde (26) faisant partie d'un cercle, les parties de cercle étant connectées par des sections essentiellement droites de l'ondulation, **caractérisé en ce que** le rayon de courbure RT des creux d'onde (25) est supérieur par rapport au rayon de courbure RB des sommets d'onde (26).

2. Conduit selon la revendication 1, **caractérisé en ce que** la profondeur de l'ondulation T est comprise entre 4.5 mm et 5 mm, particulièrement la profondeur d'ondulation T étant de 4.5 mm, avec un diamètre extérieur D du conduit compris entre 63 mm et 90 mm.

3. Conduit selon la revendication 1, **caractérisé en ce que** la profondeur de l'ondulation T est comprise entre 5 mm et 8 mm, particulièrement la profondeur d'ondulation étant de 5.5 mm, avec un diamètre extérieur D du conduit compris entre 90 mm et 202 mm.

4. Conduit selon la revendication 1, **caractérisé en ce que** le rayon RT des creux d'onde (25) est supérieur à 10 mm jusqu'à 11 mm et le rayon RB des sommets d'onde (26) est supérieur à 9 mm jusqu'à 10 mm, avec un diamètre extérieur D du conduit compris entre 63 mm et 90 mm.

5. Conduit selon la revendication 1, **caractérisé en ce que** le rayon RT des creux d'onde (25) est supérieur à 15 mm jusqu'à 18 mm et le rayon RB des sommets d'onde (26) est supérieur à 13 mm jusqu'à 15 mm, avec un diamètre extérieur D du conduit (22) compris entre 90 mm et 202 mm.

6. Conduit selon l'une des revendications 1 à 5, **caractérisé en ce que** la distance W du plus bas point de deux creux d'onde (25) adjacents est comprise entre 25 mm et 50 mm.

7. Conduit selon la revendication 6, **caractérisé en ce que** la distance entre deux creux d'onde (25) adjacents est comprise entre 25 mm et 33 mm et particulièrement comprise entre 25 mm et 27 mm, avec un diamètre extérieur D du conduit compris entre 63 mm et 90 mm.

8. Conduit selon la revendication 6, **caractérisé en ce que** la distance entre deux creux d'onde (25) adjacents est supérieure à 33 mm jusqu'à 50 mm et particulièrement supérieure à 33 mm jusqu'à 40 mm et particulièrement supérieure à 33 mm jusqu'à 35 mm, avec un diamètre extérieur D du conduit (22) compris entre 90 mm et 202 mm.

9. Conduit selon l'une des revendications 1 à 8, **caractérisé en ce que** la couche d'isolation thermique (14) est formée d'une mousse de polyuréthane rigide ayant une densité comprise entre 45 kg/m³ et 80 kg/m³.

10. Procédé pour produire un conduit ondulé, thermiquement isolée (22) selon l'une des revendications 1 - 9, comprenant au moins un tube à fluide intérieur (2), une carcasse extérieure ondulée (15) en plastique arrangée à une distance du tube à fluide intérieur et une couche d'isolation thermique (14) en plastique moussé remplissant l'espace entre le tube de fluide (2) et la carcasse extérieure, au début le tube à fluide (2) étant moussé avec l'isolation thermique (14) et l'isolation thermique étant formée pendant cette étape, et ensuite la carcasse extérieure (15) étant extrudée sur l'ébauche (10) formé par le tube de fluide moussé et les creux d'onde (25) et les sommets d'onde (26) de l'ondulation étant produits avec une ronde forme de coupe transversale pendant la formation de l'isolation thermique, avec un diamètre extérieur du tube de fluide compris entre 63 mm et 202 mm, la profondeur de l'ondulation T étant produite dans une gamme comprise entre 4.5 mm et 8 mm, dans chaque cas la ronde forme de section transversale des creux d'onde (25) et des sommets d'onde (26) étant produite comme partie d'un cercle, **caractérisé en ce que** le rayon de courbure RT des creux d'onde (25) est supérieur par rapport au rayon de courbure RB des sommets d'onde (26).

11. Procédé selon la revendication 10, **caractérisé en ce que** le rayon RT des creux d'onde (25) est produit dans une gamme supérieure à 10 mm jusqu'à 11 mm et le rayon RB des sommets d'onde (26) est produit dans une gamme supérieure à 9 mm jusqu'à 10 mm, avec un diamètre extérieur D du conduit (22) compris entre 63 mm et 90 mm.

12. Procédé selon la revendication 10, **caractérisé en ce que** le rayon RT des creux d'onde (25) est produit dans une gamme supérieure à 15 mm jusqu'à 18 mm et le rayon RB des sommets d'onde (26) est produit dans une gamme supérieure à 13 mm jusqu'à 15 mm, avec un diamètre extérieur D du conduit (22) compris entre 90 mm et 202 mm.

13. Procédé selon l'une des revendications 10 à 12, **caractérisé en ce que** la distance W du plus bas point de deux creux d'onde (25) adjacents est produite dans une gamme comprise entre 25 mm et 50 mm.

14. Procédé selon la revendication 13, **caractérisé en ce que** la distance W entre deux creux d'onde (25) adjacents est produite couché dans une gamme comprise entre 25 mm et 33 mm, et particulièrement produite dans une gamme comprise entre 25 mm et 27 mm, avec un diamètre extérieur D du conduit (22) compris entre 63 mm et 90 mm.

15. Procédé selon la revendication 13, **caractérisé en ce que** la distance W entre deux creux d'onde (25) adjacents est produite couché dans une gamme supérieure à 33 mm jusqu'à 50 mm, et particulièrement produite dans une gamme supérieure à 33 mm jusqu'à 40 mm, et particulièrement produite dans une gamme supérieure à 33 mm jusqu'à 35 mm, avec un diamètre extérieur D du conduit compris entre 90 mm et 202 mm.
